# Europäisches Patentamt
# European Patent Office
# Office européen des brevets

(19)

(11) Numéro de publication : **0 174 893**
**B1**

(12) **FASCICULE DE BREVET EUROPÉEN**

(45) Date de publication du fascicule du brevet :
**19.07.89**

(51) Int. Cl.⁴ : **C 03 C 8/10**, C 03 C 17/02

(21) Numéro de dépôt : **85401729.0**

(22) Date de dépôt : **05.09.85**

(54) Composition d'émail colorée pour l'obtention de couches décoratives sur des feuilles de verre flotté.

(30) Priorité : 12.09.84 DE 3433408

(43) Date de publication de la demande :
19.03.86 Bulletin 86/12

(45) Mention de la délivrance du brevet :
19.07.89 Bulletin 89/29

(84) Etats contractants désignés :
AT BE CH DE FR GB IT LI LU NL SE

(56) Documents cités :
GB—A— 2 072 159
GB—A— 2 096 593
US—A— 356 343
CHEMICAL ABSTRACTS, vol. 95, no. 16, octobre 1981,
page 271, résumé no. 137061b, Columbus, Ohio, US;
Y.-W. PARK et al.: "Studies on the glaze for high
expansion glass ceramics", & YO OP HOE CHI 1980,
17(4), 213-16
CHEMICAL ABSTRACTS, vol. 100, no. 20, mai 1984,
page 271, résumé no. 160930q, Columbus, Ohio, US;
& JP-A-59 03 046 (MATSUSHITA ELECTRIC WORKS
LTD.) 09-01-1984

(73) Titulaire : SAINT-GOBAIN VITRAGE
Les Miroirs 18, avenue d'Alsace
F-92400 Courbevoie (FR)
BE CH FR GB IT LI LU NL SE AT
VEGLA VEREINIGTE GLASWERKE
Viktoriaallee 3-5
D-5100 Aachen (DE)
DE

(72) Inventeur : Emonts, Heinfried
Stiftstrasse 26
D-5100 Aachen (DE)
Inventeur : Gebhardt, Franz, Dr.
Feldstrasse 2
D-5102 Wurselen (DE)

(74) Mandataire : Muller, René et al
SAINT-GOBAIN RECHERCHE 39, quai Lucien Lefranc
F-93304 Aubervilliers (FR)

Jouve, 18, rue St-Denis, 75001 Paris, France

EP 0 174 893 B1

## Description

L'invention concerne une composition d'émail colorée pour former sur du verre de silicate, des couches décoratives d'émail constituées par une matrice vitreuse et des pigments qui y sont enrobés, en particulier pour former des revêtements d'émail sur des feuilles de verre flotté, la température de cuisson de la composition colorée correspondant à peu près à la température de ramollissement des feuilles de verre flotté.

Des revêtements et couches décoratives d'émail sont appliqués dans une mesure toujours croissante sur des vitrages d'automobiles, par exemple à l'état de revêtement opaque en forme de cadre au long du bord des vitrages d'automobiles qui sont utilisées suivant le procédé de collage direct dans la carrosserie d'automobile. Ces revêtements d'émail empêchent de voir le cordon de colle à travers le vitrage et servent, en outre, à augmenter l'adhérence de la colle. Des revêtements d'émail opaques sous forme de couche continue ou sous forme discontinue sont également appliqués sur le verre plat pour d'autres applications afin de réaliser des effets décoratifs. Les revêtements d'émail habituellement utilisés à cet effet consistent en une phase vitreuse fondue dans laquelle sont inclus les pigments colorés.

On a aussi appliqué, sur la surface de verre, des couches décoratives d'émail colorées et nacrées. Ainsi, dans le document GB-A-2 096 593, ces couches nacrées sont formées à partir d'une composition d'émail contenant des pigments nacrés et des pigments colorés et, pour former la matrice vitreuse, une composition contenant par exemple (en pourcentage en poids) du PbO (62,36), $SiO_2$ (28,24), $B_2O_3$ (3,82), CdO (4,11), $Na_2O$ (1,18) et ZnO (0,29). De telles compositions vitreuses contiennent une quantité importante d'oxyde de cadmium toxique.

Il est connu que la résistance à la rupture par flexion du verre plat est abaissée par ces couches d'émail. Une diminution de la résistance à la rupture en flexion des vitrages est un inconvénient particulier dans les cas où des exigences accrues sont imposées aux propriétés de résistance du verre, en particulier à la résistance à la rupture en flexion. Tel est par exemple le cas des vitrages d'automobiles.

Les émaux décoratifs doivent, en outre, présenter une bonne adhérence sur la surface du verre afin qu'ils participent, lors de la cuisson, à une liaison chimique suffisante avec la surface du verre par diffusion mutuelle et formation de phases intermédiaires. Au cas contraire, on est exposé au risque que les revêtements d'émail ne remplissent pas leur fonction propre et se détachent au cours du temps. Toutefois, à mesure que les échanges chimiques et l'adhérence à la surface du verre sont plus intenses, l'effet négatif sur la solidité mécanique des vitrages revêtus s'accentue aussi.

Les émaux connus aux fins indiquées et commercialisés induisent sans exception une diminution sensible de la résistance à la rupture en flexion. Même dans les cas les plus favorables, on n'atteint avec les vitrages qui sont munis d'un émail disponible dans le commerce qu'une résistance à la rupture en flexion d'au maximum environ 60 % de la résistance à la rupture en flexion du verre non revêtu.

L'invention a pour but de proposer un domaine de compositions pour des émaux décoratifs pour du verre plat qui, tout en assurant une liaison satisfaisante entre la couche d'émail et la surface du verre, conduisent, sous l'effet de l'émail, à une diminution sensiblement plus faible des propriétés de résistance des vitrages revêtus de l'émail.

Conformément à l'invention, on atteint ce résultat par le fait que la composition colorée présente les particularités suivantes :

a) la proportion de la matrice vitreuse dans la composition colorée s'élève à au moins 75 % en poids ;

b) la matrice vitreuse présente la composition suivante en % en poids :

| | |
|---|---|
| $SiO_2$ | 25-33 |
| PbO | 47-65 |
| $B_2O_3$ | 3-7 |
| $Na_2O$ | 1-4 |
| $K_2O$ | 0-2 |
| $Li_2O$ | 0-0,8 |
| ZnO | 0,2-5 |
| CdO | 0 |

le rapport molaire de $SiO_2$ à PbO étant compris entre 1,6 et 2,7 et la somme des oxydes alcalins étant inférieure à 5 % en poids ;

c) le coefficient de dilatation thermique linéaire de la matrice vitreuse dans l'intervalle de température de 20 à 300 °C est inférieur au coefficient de dilatation thermique linéaire du verre plat à revêtir ; et

d) la composition colorée contient une proportion de 2 à 5 % en poids de poudre de dioxyde d'étain comme additif lors de la mouture commune de la poudre de matrice vitreuse avec la poudre de pigment.

Le rapport molaire de $SiO_2$ à PbO dans la matrice vitreuse se situe de préférence, en l'occurence, dans l'intervalle de 1,8 à 2,3.

L'invention est basée sur des observations dont il ressort que des processus tant chimiques que physiques sont à l'origine de la diminution de résistance constatée et que ce sont essentiellement les propriétés de la matrice vitreuse de l'émail qui influencent les propriétés de résistance. Ce n'est que pour des teneurs supérieures en pigments, à savoir au-delà d'environ 18 % en poids de la composition pigment inclus, que l'influence des pigments sur les propriétés de résistance des vitrages munies de la couche d'émail devient sensible. Par conséquent, il s'agit d'abord de respecter les limites indiquées et conformes à l'invention pour les constituants majeurs de la matrice vitreuse.

L'oxyde de zinc joue aussi un rôle important pour les limites indiquées conformes à l'invention. L'addition de l'oxyde de zinc rend possible d'omettre l'oxyde de cadmium toxique usuellement utilisé et d'atteindre le même but, à savoir l'amélioration des propriétés d'écoulement de l'émail fondu, au moyen de l'oxyde de zinc complètement inoffensif. Une importance particulière revient aussi à la teneur en oxyde de lithium qui, conformément à l'invention, ne peut être supérieure à environ 0,8 % en poids. De façon apparente, il se forme en effet par des processus de diffusion, dans les couches superficielles du verre, des phases intermédiaires contenant de l'oxyde de lithium qui exercent une influence particulièrement défavorable sur les propriétés de résistance. Ce n'est toutefois pas l'influence de l'oxyde de lithium seul qui est responsable de l'affaiblissement constaté du verre émaillé. C'est pourquoi ce n'est que par la réalisation simultanée de toutes les particularités conformes à l'invention qu'il est possible de former des revêtements d'émail sur le verre plat qui ont un comportement optimal pour ce qui est de leur influence sur les propriétés de résistance des vitrages revêtus de l'émail et pour ce qui est de leurs propriétés d'adhérence à la surface du verre et de l'aptitude à la mise en oeuvre des compositions colorées.

Une nouvelle amélioration de l'effet souhaité peut être atteinte par une addition de dioxyde d'étain en quantité s'élevant jusqu'à 1,8 % en poids de la matrice vitreuse. Bien que la solubilité du SnO$_2$ dans le verre fondu soit relativement faible en comparaison de celle des autres constituants de la matrice vitreuse, le dioxyde d'étain est dissous en les faibles quantités indiquées dans la matrice vitreuse et participe notablement à une nouvelle augmentation de la résistance à la flexion des vitrages revêtus de la couche d'émail et à la résistance chimique de la couche d'émail.

Un autre effet favorable sur les propriétés souhaitées est exercé dans une forme de réalisation avantageuse de l'invention par l'addition d'oxydes de métaux lourds colorant la matrice vitreuse en quantités s'élevant jusqu'à environ 5 % en poids et de préférence jusqu'à environ 3 % en poids. L'addition des oxydes de métaux lourds colorants et dissous dans la matrice vitreuse a pour effet que puisque la matrice vitreuse est déjà colorée, la proportion de pigment peut être davantage abaissée, ce qui a également un effet favorable sur la résistance à la rupture en flexion des vitrages revêtus de l'émail. Comme oxydes de métaux lourds on peut citer principalement, les oxydes de chrome, de fer, de nickel, de cobalt, de manganèse et de cuivre.

D'autres oxydes, comme par exemple le CaO, MgO ou Al$_2$O$_3$ peuvent être présents aussi dans la composition fondue en quantité faible s'élevant jusqu'à environ 2 % en poids. Ces constituants, qui sont également dissous dans la matrice vitreuse, n'ont à cette faible concentration qu'un effet nul ou négligeable sur les propriétés recherchées.

De façon particulièrement avantageuse, lors de l'utilisation des compositions colorées pour les compositions de verre flotté habituelles, on choisit des compositions pour la matrice vitreuse, dans l'intervalle de compositions conforme à l'invention, qui présentent un coefficient de dilatation thermique linéaire, dans l'intervalle de 20-300 °C, $\alpha$ 20-300 = 70 à 79.10$^{-7}$ °C$^{-1}$. Du fait que le verre flotté habituel a un coefficient de dilatation thermique linéaire entre 85 et 92.10$^{-7}$ °C$^{-1}$, le rapport du coefficient de dilatation thermique linéaire de la matrice vitreuse à celui du verre flotté est de préférence de 82 à 92 %. On empêche ainsi qu'il apparaisse dans la couche d'émail lors du refroidissement des efforts de tension qui conduisent dans la couche d'émail à des microfissures qui se propagent dans la surface du verre. Déjà ces microfissures sont responsables dans une mesure sensible de la diminution constatée de la résistance à la flexion.

Divers exemples de compositions colorées conformes à l'invention sont décrits ci-après.

Exemple 1

On fait fondre comme matrice vitreuse pour une composition colorée un émail de base ayant l'analyse suivante en pourcentage en poids :

| | |
|---|---|
| SiO$_2$ | 28,14 |
| PbO | 56,29 |
| B$_2$O$_3$ | 5,08 |
| Na$_2$O | 1,47 |
| K$_2$O | 0,19 |
| Li$_2$O | 0,44 |
| ZnO | 5,00 |
| CaO | 0,81 |
| MgO | 0,33 |
| Al$_2$O$_3$ | 0,02 |
| Fe$_2$O$_3$ | 0,18 |
| CoO | 0,41 |
| MnO | 0,37 |
| NiO | 0,44 |
| CuO | 0,44 |
| Cr$_2$O$_3$ | 0,30 |

Le rapport molaire SiO$_2$:PbO de cet émail de base est de 1,86.

On trempe la masse fondue au bain d'eau, on la concasse grossièrement, on la moud par fractions dans un moulin approprié et pour l'homogénéiser davantage, on la fond et on la moud à nouveau.

En raison de la teneur en oxydes de métaux lourds d'environ 2 % en poids dans l'ensemble, cet émail de base a une couleur bleu foncé et convient comme matrice vitreuse pour des teintes très sombres.

Pour la détermination du coefficient de dilatation thermique linéaire, on coule au départ de cet émail de base à l'état fondu, un bâtonnet d'émail d'une longueur d'environ 5 cm qu'on refroidit sans tensions. Au moyen d'un dilatomètre différentiel, on détermine suivant DIN 52.328 sur ce bâtonnet d'épreuve, la dilatation thermique dans l'intervalle de température de 20 à 500 °C. A partir de la courbe relevée, on déduit, pour le coefficient de dilatation thermique linéaire de cet émail de base, une valeur de $\alpha$ 20-300 = $(75 \pm 2).10^{-7}$ °C$^{-1}$.

On détermine à l'aide d'un microscope chauffant le comportement à la fusion de l'émail de base suivant DIN 51.730. Conformément à ceci, cet émail de base a un point de frittage de 481 °C et un point de fusion des cendres de 698 °C.

Pour obtenir un émail noir, on ajoute comme pigment coloré, à 78 parties en poids de l'émail de base ainsi préparé, 18 parties en poids de spinelle noire cristalline, à savoir de chromite de cuivre et/ou de spinelle du type magnétite. On ajoute, de plus, 4 parties en poids de SnO$_2$ et on broie le mélange au mouillé jusqu'à la granulométrie souhaitée.

Après le broyage, on sèche la poudre d'émail. Ensuite, on procédé à une nouvelle homogénéisation de la poudre d'émail préparée dans un mélangeur approprié. On détermine ensuite, sur différents vitrages revêtus de cet émail, la résistance à la rupture en flexion et on la compare à la résistance en rupture en flexion des vitrages non revêtus. On utilise comme éprouvettes des vitrages de 10 cm x 10 cm d'une épaisseur de 1,5 mm en verre flotté de la composition suivante :

| | |
|---|---|
| SiO$_2$ | 72,36 % |
| Al$_2$O$_3$ | 0,62 % |
| Fe$_2$O$_3$ | 0,13 % |
| TiO$_2$ | 0,12 % |
| CaO | 8,67 % |
| MgO | 3,88 % |
| SO$_3$ | 0,23 % |
| Na$_2$O | 13,64 % |
| K$_2$O | 0,33 % |

La mesure du coefficient de dilatation thermique linéaire du verre flotté conformément à DIN 52.328 indique une valeur de $\alpha$ 20-300 = $(85 \pm 2).10^{-7}$ °C$^{-1}$.

Le rapport du coefficient de dilatation thermique linéaire de la matrice vitreuse de l'émail à celui du verre flotté est donc de 88 %.

On applique sur la surface des vitres, par le procédé sérigraphique, l'émail en foudre amené au moyen d'une huile organique de dilution à une consistance permettant l'impression en une épaisseur de couche qui conduit, après la cuisson, à une couche d'émail d'une épaisseur d'environ 20 $\mu$m. On opère la cuisson en chauffant les vitrages imprimés pendant une demi-heure à 650 °C. Après la cuisson, on refroidit lentement les vitrages.

On détermine la résistance à la rupture en flexion au moyen d'un dispositif de mesure dans lequel l'influence des bords est supprimée. L'augmentation de la charge de flexion est réalisée, en l'occurrence, avec une vitesse d'avancement de 2 mm par minute de l'organe de pression.

On calcule dans chaque cas, les valeurs moyennes de mesure à partir de 30 mesures individuelles. Les résultats de mesure indiquent que la résistance à la rupture de mesure indiquent que la résistance à la rupture en flexion des vitres revêtues de la couche d'émail s'élèvent à 85 % de la résistance à la rupture en flexion des vitres non revêtues.

Exemple 2

En vue de revêtir un verre flotté ayant la composition indiquée dans l'exemple 1 et un coefficient de dilatation thermique linéaire $\alpha$ 20-300 = $(85 \pm 2).10^{-7}$ °C$^{-1}$, on fait fondre, comme matrice vitreuse pour la composition colorée, un émail de base de couleur foncée ayant l'analyse suivante en pourcentages pondéraux :

| | |
|---|---|
| SiO$_2$ | 28,78 |
| PbO | 62,89 |
| B$_2$O$_3$ | 3,04 |
| Na$_2$O | 1,41 |
| K$_2$O | 0,74 |
| Li$_2$O | 0,05 |
| ZnO | 0,33 |
| SnO$_2$ | 0,66 |
| CaO | 0,05 |
| MgO | 0,07 |
| Al$_2$O$_3$ | 0,03 |
| CoO | 0,38 |
| NiO | 0,40 |
| CuO | 0,40 |
| MnO | 0,34 |
| Fe$_2$O$_3$ | 0,17 |
| Cr$_2$O$_3$ | 0,28 |

Le rapport molaire SiO$_2$:PbO de cet émail de base s'élève à 1,7 et la somme des oxydes alcalins à 2,20 %.

La poursuite du traitement de cet émail de base après la première fusion et l'exécution des différentes mesures se font de la même façon que celles décrites à propos de l'exemple 1. On utilise pour la détermination de la résistance à la rupture en flexion aussi le verre flotté décrit dans l'exemple 1.

On détermine aussi le coefficient de dilatation thermique $\alpha$ 20-300, de même que le comportement à la fusion de cet émail de base. Les mesures donnent, pour le coefficient de dilatation thermique linéaire, une valeur de $\alpha$ 20-300 = $(76,5 \pm 2).10^{-7}$ °C$^{-1}$, c'est-à-dire que le rapport du coefficient de dilatation thermique linéaire de la matrice vitreuse de l'émail à celui du verre flotté est dans ce cas de 90 %. Le point de frittage de cet émail de base est de 512 °C et le point de fusion des cendres est de 745 °C.

Pour la préparation d'une composition d'émail colorée, on mélange et on broie au mouillé 78 parties de l'émail de base, 4 parties de poudre de dioxyde d'étain et 18 parties de pigments colorés. Après séchage et ensuite nouvelle homogénéisation, on obtient la poudre d'émail prête à l'usage qu'on applique sur des vitrages et qu'on cuit comme décrit dans l'exemple 1 pour la détermination de la résistance à la rupture en flexion des vitrages revêtus.

Pour la détermination de la résistance à la rupture en flexion d'éprouvettes de verre plat non revêtues et revêtues de cet émail, on exécute à nouveau les mesures sur 30 échantillons et on calcule la moyenne des résultats des mesures individuelles. Les résultats de mesure montrent que la résistance à la rupture en flexion des vitrages émaillés n'est à nouveau inférieure que d'environ 15 % à la résistance à la rupture en flexion des vitrages non revêtus et s'élève, en d'autres termes, en moyenne à nouveau à environ 85 % de la résistance à la rupture en flexion des vitrages non revêtus.

Exemple 3

Il s'agit à nouveau de munir d'une couche d'émail coloré, des vitrages de verre flotté de la composition indiquée dans l'exemple 1 et ayant un coefficient de dilatation thermique linéaire $\alpha$ 20-300 $=(85 \pm 2) . 10^{-7}$ °C$^{-1}$.

Comme matrice vitreuse pour la composition colorée, on fait fondre un émail de base coloré ayant l'analyse suivante en pourcentages pondéraux :

| | |
|---|---|
| $SiO_2$ | 32,29 |
| $PbO$ | 52,15 |
| $B_2O_3$ | 4,63 |
| $Na_2O$ | 2,85 |
| $K_2O$ | 1,73 |
| $Li_2O$ | 0,23 |
| $ZnO$ | 2,15 |
| $SnO_2$ | 1,47 |
| $CaO$ | 0,12 |
| $MgO$ | 0,12 |
| $Al_2O_3$ | 0,06 |
| $CoO$ | 0,42 |
| $MnO$ | 0,38 |
| $NiO$ | 0,45 |
| $CuO$ | 0,45 |
| $Fe_2O_3$ | 0,19 |
| $Cr_2O_3$ | 0,31 |

Le rapport molaire $SiO_2$:$PbO$ de cet émail de base s'élève à 2,3 et la somme des oxydes alcalins à 4,81 % en poids.

On procède à la poursuite du traitement de l'émail de base fondu et à la conduite des différentes mesures de la même façon qu'il est décrit en détail dans l'exemple 1. Les mesures indiquent un coefficient de dilatation thermique linéaire $\alpha$ 20-300$=(77,5 \pm 2).10^{-7}$ °C$^{-1}$. Le rapport du coefficient de dilatation thermique linéaire de cet émail de base, c'est-à-dire de la matrice vitreuse de l'émail, au coefficient de dilatation thermique linéaire du verre à revêtir est donc de 91 %.

Le point de frittage de cet émail de base est de 505 °C et le point de fusion des cendres est de 737 °C.

Pour la préparation de la composition colorée, on mélange soigneusement, on broie au mouillé et on sèche ensuite 82 parties de l'émail de base, 14 parties de pigments colorés et 4 parties de dioxyde d'étain en poudre. On homogénéise à nouveau la poudre d'émail séchée dans un mélangeur approprié. On mélange la poudre d'émail prête à l'usage ainsi obtenue avec une huile de dilution organique et on l'applique suivant le procédé de sérigraphie sur les vitrages en une épaisseur telle que l'épaisseur de la couche d'émail soit d'environ 20 $\mu$m après cuisson à 650 °C.

Pour la détermination de la résistance à la rupture en flexion d'éprouvettes de vitrages non revêtus d'une part et d'éprouvettes de vitrages émaillés d'autre part, on exécute les opérations à nouveau à chaque reprise sur 30 échantillons et on calcule la moyenne des résultats de mesure. Les résultats de mesure moyens indiquent que la résistance à la rupture en flexion des vitrages émaillés s'élève à environ 83 % de la résistance à la rupture en flexion des vitrages non émaillés.

Exemple 4

Il s'agit à nouveau de munir d'une couche d'émail coloré des vitrages de verre flotté de la composition indiquée dans l'exemple 1 et ayant un coefficient de dilatation thermique linéaire $\alpha$ 20-300$=(85 \pm 2) . 10^{-7}$ °C-1. Comme matrice vitreuse pour la composition colorée, on fait fondre un émail de base coloré ayant la composition suivante en pourcentages pondéraux :

| | |
|---|---|
| $SiO_2$ | 32,28 |
| $PbO$ | 52,15 |
| $B_2O_3$ | 4,76 |
| $Na_2O$ | 2,06 |
| $K_2O$ | 1,13 |
| $Li_2O$ | 0,20 |
| $ZnO$ | 3,18 |
| $SnO_2$ | 1,47 |
| $CaO$ | 0,27 |
| $MgO$ | 0,20 |
| $Al_2O_3$ | 0,10 |
| $CoO$ | 0,42 |
| $MnO$ | 0,38 |
| $NiO$ | 0,45 |
| $CuO$ | 0,45 |
| $Cr_2O_3$ | 0,31 |
| $Fe_2O_3$ | 0,19 |

Le rapport molaire $SiO2$ :$PbO$ s'élève à nouveau à 2,3 et la somme des oxydes alcalins à 3,39 % en poids.

On procède à la poursuite du traitement de l'émail fondu et à la conduite des diverses mesures de la façon décrite dans l'exemple 1. Les mesures indiquent un coefficient de dilatation thermique linéaire de l'émail de base $\alpha$ 20-300$=(74 \pm 2).10^{-7}$ °C-1, de sorte que le rapport du coefficient de dilatation thermique linéaire de l'émail à celui du verre flotté est en l'occurrence de 87 %.

Le point de frittage de cet émail de base est de 528 °C et le point de fusion des cendres est de 824 °C.

Pour la préparation de la composition colorée, on mélange soigneusement, on broie au mouillé et on sèche ensuite 80 parties de l'émail de base, 16 parties de pigments colorés et 4 parties de dioxyde d'étain en poudre. On homogénéise à nouveau la poudre d'émail séchée dans un mélangeur approprié. On mélange l'émail en poudre prêt à l'usage ainsi obtenu avec une huile organique de dilution et on l'applique suivant le procédé sérigraphique sur les vitrages en une épaisseur telle qu'il se forme, après cuisson à 650 °C, une couche d'émail d'une épaisseur d'environ 20 μm.

Sur 30 vitrages non revêtus et 30 vitrages revêtus de l'émail, on détermine ensuite la résistance à la rupture en flexion et on calcule la moyenne des résultats de mesure. La comparaison des résultats de mesure montre que les vitrages revêtus de l'émail ont une résistance à la rupture en flexion qui s'élève à environ 85 % de la résistance à la rupture en flexion des vitrages non revêtus.

## Revendications

1. Composition d'émail colorée pour former sur du verre de silicate, des couches décoratives d'émail comprenant une matrice vitreuse et des pigments qui y sont inclus, en particulier pour former des revêtements d'émail sur des vitrages de verre flotté, la température de cuisson de l'émail correspondant à peu près à la température de ramollissement du vitrage, caractérisée par les particularités suivantes :

a) la proportion de la matrice vitreuse dans la composition colorée s'élève à au moins 75 % en poids ;

b) la matrice vitreuse présente la composition suivante en % en poids :

| | |
|---|---|
| $SiO_2$ | 25-33 |
| PbO | 47-65 |
| $B_2O_3$ | 3-7 |
| $Na_2O$ | 1-4 |
| $K_2O$ | 0-2 |
| $Li_2O$ | 0-0,8 |
| ZnO | 0,2-5 |
| CdO | 0 |

le rapport molaire de $SiO_2$ à PbO étant compris entre 1,6 et 2,7 et la somme des oxydes alcalins étant inférieure à 5 % en poids ;

c) le coefficient de dilatation linéaire de la matrice vitreuse dans l'intervalle de température de 20 à 300 °C est inférieur au coefficient de dilatation thermique linéaire du verre à revêtir ; et

d) la composition d'émail colorée contient une proportion de 2 à 5 % en poids de poudre de dioxyde d'étain comme additif lors de la mouture commune de la poudre de matrice vitreuse avec la poudre de pigment.

2. Composition d'émail colorée suivant la revendication 1, caractérisée en ce que le rapport molaire de $SiO_2$ à PbO dans la matrice vitreuse est de 1,8 à 2,3.

3. Composition suivant la revendication 1 ou 2, caractérisée en ce que le coefficient de dilatation thermique linéaire de la matrice vitreuse est de 75 à 95 % et de préférence de 80 à 90 % du coefficient de dilatation thermique du verre à revêtir.

4. Composition suivant l'une des revendications 1 à 3, caractérisée en ce que la matrice vitreuse contient jusqu'à 1,8 % en poids de $SnO_2$ sous forme dissoute.

5. Composition suivant l'une des revendications 1 à 4, caractérisée par une addition d'oxydes de métaux lourds solubles dans la matrice vitreuse en une quantité s'élevant jusqu'à environ 5 % en poids par rapport aux constituants formant la matrice vitreuse.

6. Composition suivant la revendication 5, caractérisée en ce que pour la préparation de revêtements d'émail foncé, on utilise, comme oxydes de métaux lourds, des oxydes de chrome, de nickel, de cobalt, de fer, de manganèse et de cuivre.

7. Composition suivant une ou plusieurs des revendications 1 à 6, caractérisée en ce que la matrice vitreuse contient du CaO, du MgO et/ou du $Al_2O_3$ en une quantité totale d'environ 2 % en poids au maximum.

8. Composition suivant une ou plusieurs des revendications 1 à 7, caractérisée en ce que la proportion de pigments colorés est au maximum d'environ 18 % en poids par rapport à la poudre d'émail prête à l'usage.

9. Utilisation d'une composition suivant l'une quelconque des revendications 1 à 8 pour former des couches d'émail sur du verre flotté de la composition suivante en pourcentages pondéraux : 70-73 % $SiO_2$, 8-10 % CaO, 3-5 % MgO, 12-14,5 % $Na_2O$ et 0-1 % $K_2O$.

## Claims

1. Coloured enamel composition for forming on silicate glass, decorative enamel layers comprising a vitreous matrix and pigments which are included therein, in particular for forming enamel coatings on panes of float glass, the baking temperature of the enamel corresponding approximately to the softening temperature of the pane, characterized by the following special features :

a) the proportion of the vitreous matrix in the coloured composition amounts to at least 75 % by weight ;

b) the vitreous matrix has the following composition in % by weight :

| | |
|---|---|
| $SiO_2$ | 25-33 |
| PbO | 47-65 |
| $B_2O_3$ | 3-7 |
| $Na_2O$ | 1-4 |
| $K_2O$ | 0-2 |
| $Li_2O$ | 0-0.8 |
| ZnO | 0.2-5 |
| CdO | 0 |

the molar ratio of SiO₂ to PbO being from 1.6 to 2.7 and the sum of the alkaline oxides being less than 5 % by weight ;

c) the linear thermal expansion coefficient of the vitreous matrix in the temperature range from 20 to 300 °C is less than the linear thermal expansion coefficient of the glass to be coated ;

d) the coloured enamel composition contains a proportion of from 2 to 5 % by weight of $SnO_2$ as additive during the common grinding of the vitreous matrix powder with the pigment powder.

2. Coloured enamel composition according to Claim 1, characterized in that the molar ratio of $SiO_2$ to PbO in the vitreous matrix is from 1.8 to 2.3.

3. Composition according to Claim 1 or 2, characterized in that the linear thermal expansion coefficient of the vitreous matrix is from 75 to 95 % and preferably from 80 to 90 % of the thermal expansion coefficient of the glass to be coated.

4. Composition according to one of Claims 1 to 3, characterized in that the vitreous matrix contains up to 1.8 % by weight of $SnO_2$ in dissolved form.

5. Composition according to one of Claims 1 to 4, characterized by an addition of oxides of heavy metals that are soluble in the vitreous matrix in a proportion of up to approximately 5 % by weight in relation to the constituents forming the vitreous matrix.

6. Composition according to Claim 5 characterized in that, for the preparation of dark enamel coatings there are used, as heavy metal oxides, oxides of chromium, nickel, cobalt, iron, manganese and copper.

7. Composition according to one or more of Claims 1 to 6, characterized in that the vitreous matrix contains CaO, MgO and/or $Al_2O_3$ in a total quantity of approximately 2 % by weight at maximum.

8. Composition according to one or more of Claims 1 to 7, characterized in that the proportion of coloured pigments is at most approximately 18 % by weight in relation to the enamel powder ready for use.

9. Use of a composition according to any one of Claims 1 to 8 for forming enamel layers on float glass having the following composition in percentages by weight : 70-73 % $SiO_2$, 8-10 % CaO, 3-5 % MgO, 12-14.5 % $Na_2O$ and 0-1 % $K_2O$.

## Patentansprüche

1. Farbige Emailzusammensetzung zur Herstellung von emailartigen Dekorschichten auf Silikatglas, aus einer Glasmatrix und darin eingelagerten Pigmenten, insbesondere für die Bildung von Emaïlschichten auf Floatglasscheiben, wobei die Einbrenntemperatur etwa der Erweichungstemperatur der Glasscheibe entspricht, gekennzeichnet durch folgende Merkmale :

a) der Anteil der Glasmatrix in der farbigen Emailzusammensetzung beträgt wenigstens 75 % Gew.-% ;

b) die Glasmatrix weist folgende Zusammensetzung in Gew.-% auf :

| | |
|---|---|
| SiO₂ | 25-33 |
| PbO | 47-65 |
| B₂O₃ | 3-7 |
| Na₂O | 1-4 |
| K₂O | 0-2 |
| Li₂O | 0-0,8 |
| ZnO | 0,2-5 |
| CdO | 0 |

wobei das Molverhältnis von SiO2 zu PbO zwischen 1,6 und 2,7 liegt und die Summe der Alkalioxide kleiner als 5 Gew.-% ist ;

c) der lineare Wärmeausdehnungskoeffizient der Glasmatrix im Temperaturbereich von 20 bis 300° ist kleiner als der lineare Wärmeausdehnungskoeffizient des zu beschichtenden Glases, und

d) die farbige Emailzusammensetzung enthält einen Anteil von 2 bis 5 Gew.-% Zinndioxidpulver als Zusatz beim gemeinsamen Vermahlen des Glasmatrixpulvers mit dem Pigment-Pulver.

2. Farbige Emailzusammensetzung nach Anspruch 1, dadurch gekennzeichnet, daß das Molverhältnis von $SiO_2$ zu PbO in der Glasmatrix 1,8 bis 2,3 beträgt.

3. Zusammensetzung nach Anspruch 1 oder 2, dadurch gekennzeichnet, daß der lineare Wärmeausdehnungskoeffizient der Glasmatrix 75 bis 95 %, und vorzugsweise 80 bis 90 % des Wärmeausdehnungskoeffizienten des zu beschichtenden Glases beträgt.

4. Zusammensetzung nach einem der Ansprüche 1 bis 3, dadurch gekennzeichnet, daß die Glasmatrix bis zu 1,8 Gew.-% $SnO_2$ in gelöster Form enthält.

5. Zusammensetzung nach einem der Ansprüche 1 bis 4, gekennzeichnet durch einen Zusatz von in der Glasmatrix löslichen Schwermetalloxiden in einer Menge von bis zu etwa 5 Gew.-% bezogen auf die die Glasmatrix bildenden Bestandteile.

6. Zusammensetzung nach Anspruch 5, dadurch gekennzeichnet, daß zur Herstellung von dunklen Emailüberzügen als Schwermetalloxide Oxide von Chrom, Nickel, Kobalt, Eisen, Mangan und Kupfer verwendet werden.

7. Zusammensetzung nach einem oder mehreren der Ansprüche 1 bis 6, dadurch gekennzeichnet, daß die Glasmatrix CaO, MgO und/oder $Al_2O_3$ in einer Menge von insgesamt höchstens etwa 2 Gew.-% enthält.

8. Zusammensetzung nach einem oder mehreren der Ansprüche 1 bis 7, dadurch gekennzeichnet, daß der Anteil der Farbpigmente höchstens etwa 18 Gew.-% bezogen auf das fertige Emailpulver beträgt.

9. Verwendung einer Zusammensetzung nach einem der Ansprüche 1 bis 8 zur Herstellung von Emailschichten auf Floatglas folgender Zusammensetzung in Gewichtsprozent : 70 bis 73 % $SiO_2$, 8-10 % CaO, 3-5 % MgO, 12-14,5 % $Na_2O$ und 0-1 % $K_2O$.